**Europäisches Patentamt**

**European Patent Office**

**Office européen des brevets**

(19)

(11) **EP 1 063 575 A1**

(12) **EUROPÄISCHE PATENTANMELDUNG**

(43) Veröffentlichungstag:
**27.12.2000 Patentblatt 2000/52**

(51) Int Cl.[7]: **G05B 15/02**, G05B 19/40

(21) Anmeldenummer: **99112101.3**

(22) Anmeldetag: **23.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **IPM Hochschule fur Technik, Wirtschaft und Sozialwesen Zittau/Görlitz (FH) 02763 Zittau (DE)**

(72) Erfinder:
• **Hampel, Rainer**
  **02797 Lückendorf (DE)**
• **Stegemann, Holger**
  **18273 Güstrow (DE)**
• **Worlitz, Frank**
  **02763 Oberseifersdorf (DE)**
• **Chaker, Nasredin**
  **02763 Zittau (DE)**

(54) **Verfahren zur Regelung zeitkritischer Prozesse durch einen High Speed Matrix Controller**

(57) In bekannten technischen Lösungen ist die Regelung unter Ausnutzung von Kennfeldern so realisiert, daß nicht im Kennfeld hinterlegte Werte zwischen den vorhandenen Stützstellen nach verschiedenen Interpolationsverfahren berechnet werden. Das neue Verfahren soll die Abarbeitungszeit des im Kennfeld hinterlegten Algorithmus verringern und damit den Einsatz in schnell ablaufenden Prozessen ermöglichen.

Die Erfindung betrifft ein Verfahren zur Steuerung, Regelung und Signalverarbeitung zeitkritischer Prozesse durch einen High Speed Matrix Controller mit n Eingangsgrößen und einer Ausgangsgröße unter Ausnutzung eines Kennfeldes, in dem der Algorithmus hinterlegt ist. Das Kennfeld wird extern berechnet und auf elektronische Speicher geladen. Hierbei bilden die digitalisierten Eingangsgrößen die Adressen, über die der Speicher angesprochen wird und der Inhalt der über die Adresse angesprochenen Speicherzelle ist die digitale Ausgangsgröße. Die Abarbeitungszeit ist unabhängig von Umfang und Art des Algorithmus sowie von der Auflösung des Kennfeldes.

Die Erfindung kann in allen Bereichen der Industrie, wo die schnelle Abarbeitung komplexer Algorithmen gefordert ist, zweckmäßig eingesetzt werden.

Fig. 1: Grundsätzlicher Aufbau eines High Speed Matrix Controllers

**Beschreibung**

Die Erfindung betrifft ein Verfahren zur Steuerung, Regelung und Signalverarbeitung zeitkritischer Prozesse durch einen High Speed Matrix Controller mit n Eingangsgrößen und einer Ausgangsgröße unter Ausnutzung eines Kennfeldes, in dem der Algorithmus hinterlegt ist. Die Erfindung kann in allen Bereichen der Industrie, wo die schnelle Abarbeitung komplexer Algorithmen gefordert ist, zweckmäßig eingesetzt werden.

In bisher bekannten technischen Lösungen werden für die Steuerung und Regelung digitalisierte Signale verwendet, die über A/D-Wandler-Baugruppen bereitgestellt werden. Gegenwärtig ist die Regelung unter Ausnutzung von Kennfeldern so realisiert, daß Werte, die nicht im Kennfeld hinterlegt sind, zwischen den vorhandenen Werten (Stützstellen) nach verschiedenen Interpolationsverfahren berechnet werden (Kettner, Thorsten: Übertragunsglied für einen Kennfeldregler, Patent DE 19 53 44 59 A1 und Dissertation Dirk Drechsel: Regelbasierte Interpolation (RIP)- und Fuzzy-Methoden in der wissensbasierten Automatisierungstechnik, Universität Kaiserslautern 1995).

Damit tritt eine nichtreproduzierbare Deformation des Kennfeldes ein. Die Berechnung erfordert einen zusätzlichen Zeitaufwand, der bei der Steuerung und Regelung zeitkritischer Prozesse nicht vertretbar ist. Außerdem ist für die Berechnung der Einsatz zusätzlicher Rechenhardware erforderlich (Dissertation Schwarz, Christian: Simulation des transienten Betriebsverhaltens von aufgeladenen Dieselmotoren mit Hilfe eines 7-dimensionalen Kennfeldes für die Arbeitsprozeßrechnung im Zylinder, TU München 1993).

Der Erfindung liegt das Problem zugrunde, die Zeit für die Abarbeitung des Algorithmus in Form des Kennfeldes zu verringern und damit den Einsatz in schnell ablaufenden Prozessen zu ermöglichen. Diese Zeit stellt die minimal mögliche Zeit dar und setzt sich aus der Wandlungszeit des A/D-Wandlers, der Zeit für den Aufruf und das Auslesen des Speichers sowie aus der Wandlungszeit des D/A-Wandlers zusammen.
Dieses Problem wird durch die im Patentanspruch 1 aufgeführten Merkmale gelöst.

Der adreßorientierte High Speed Matrix Controller besteht aus n A/D-Wandlern für die Digitalisierung der Eingangssignale, einem elektronischen Speicher für ein Kennfeld und einem D/A-Wandler für die Ausgabe einer Stellgröße des Reglers.

Für einen n-dimensionalen Controller werden an die n Eingänge n Ausgänge von Sensoren/Meßwertverarbeitungseinrichtungen gelegt. Nach Verarbeitung der Eingangssignale, die nachfolgend beschrieben wird, erfolgt am Ausgang die Ausgabe des Stellsignals für die Stelleinrichtung im Regelkreis bei Einsatz als Regler.
Das Verfahren ist dadurch gekennzeichnet, daß die Berechnung und der Test beliebiger Algorithmen außerhalb des High Speed Matrix Controllers, beispielsweise in einem Simulationssystem, erfolgen. Danach wird der ausgewählte Algorithmus für n Eingänge in ein n-dimensionales Kennfeld konvertiert, indem entsprechend der gewünschten Auflösung (bit) ebensoviele Werte für jede Eingangsgröße vorgegeben werden und die Ausgangsgröße berechnet wird. Die Auflösung ist vom Anwender festzulegen und richtet sich nach der Applikation.

Gemäß der Unterteilung der Wertebereiche der Eingänge (Auflösung) sind A/D-Wandler gleicher Auflösung einzusetzen. Die Zahl der Werte, die im Wertebereich eines Eingangs abgebildet werden, beträgt 2 MSB - 1 (MSB = most significant bit). Gemäß der Unterteilung der Wertebereiche des Ausgangs (Auflösung) ist ein D/A-Wandler gleicher Auflösung einzusetzen.

Damit ergeben sich der Adreßbereich nach der Summe der Auflösungen der einzelnen A/D-Wandler und die Datenbreite des Speichers nach der Auflösung des D/A-Wandlers. Auf den Speicher wird das Kennfeld in folgender Form geladen:

$$\text{digitalisierter Wert des Eingangs } E_i = \text{Adreßteil i der Speicheradresse; } i=1...n$$

Die Speicheradresse ergibt sich aus der Aneinanderreihung der einzelnen Adreßteile.
Der Inhalt des Speicherzelle, der durch die so gebildete Adresse angesprochen wird, ist der vorher vorausberechnete Matrixpunkt des Kennfeldes. Das Laden erfolgt für alle Matrixpunkte des Kennfeldes. Nach dem Laden des berechneten Kennfeldes auf den Speicher kann der High Speed Matrix Controller für die Steuerung, Regelung oder Signalverarbeitung eingesetzt werden.

Über die A/D-Wandler der einzelnen Eingänge werden die digitalen Werte der Meßwerte gebildet. Die maximale Verarbeitungsgeschwindigkeit des Algorithmus wird dadurch erreicht, daß die Meßwerte, die bei der digitalen Regelung in digitale Werte gewandelt werden, gleichzeitig die Adresse der angesprochenen Speicherzelle (über eine Ansteuereinrichtung) bilden. Diese muß nur noch in einem Schritt ausgelesen und der Inhalt an den D/A-Wandler übergeben werden, der das analoge Stellsignal ausgibt.

Für die Regelung von Mehrgrößensystemen mit n Eingangsgrößen und einer Ausgangsgröße können n-1 High Speed Matrix Controller in Form einer Kaskade nach Patentanspruch 3 zusammengeschaltet werden. Dazu werden durch Prozeßanalyse die dominierenden und nichtdominierenden Eingangsgrößen des Mehrgrößensystems festgelegt. Die Eingangsgrößen werden auf die einzelnen der Controller der Kaskade aufgeteilt, wobei die dominierende Größen den Controllern am Anfang der Kaskade und die nichtdominierenden Größen den nachfolgenden Controllern zugeordnet werden. Controller mit dominierenden Eingangsgrößen bilden den Basiswert für die Ausgangsgröße und Controller mit nichtdominierenden Eingangsgrößen beinhalten eine Adaptionsvorschrift. Die Festlegung des Berechnungsvorschrift kann sowohl mit wissensbasierten als auch mit analytischen Methoden erfolgen. Durch Variation der Eingangsgrößen je nach applikationsabhängiger Auflösung werden die Kennfelder für die einzelnen Controller berechnet.

Die n-1 Kennfelder werden auf eine Kaskade von n-1 High Speed Matrix Controllern geladen, wobei jeder Controller zwei Eingänge und einen Ausgang besitzt.

Der erste Controller der Kaskade verarbeitet zwei Meßgrößen als Eingangsgrößen zu einer virtuellen Größe als Ausgangsgröße. Die weiteren Controller verarbeiten jeweils eine Meßgröße und die virtuelle Größe des vorigen Controllers zu einer weiteren virtuellen Größe. Der Adreßbereich des Speicherblocks des ersten Controllers ergibt sich aus der Summe der Auflösungen der beiden A/D-Wandler, die Adreßbereiche der Speicherblöcke der folgenden Controller ergeben sich aus der Summe der Auflösungen des jeweiligen A/D-Wandlers und der Datenbreite der virtuellen Größen.

Der Inhalt der über die Adresse angesprochenen Speicherzelle eines Speicherblocks bildet zusammen mit der durch Digitalisierung einer Eingangsgröße gebildeten Adresse eine weitere Adresse für den nachfolgenden Speicherblock. Die Datenbreite eines Speicherblocks wird aus der Auflösung der entsprechenden virtuellen Größe am Ausgang bestimmt. Der Inhalt der adressierten Speicherzelle des letzten Speicherblocks ist die Ausgangsgröße ist, wobei sich die Datenbreite des letzten Speicherblocks aus der Auflösung des entsprechenden D/A-Wandlers ergibt.

Die Erfindung wird in einem Ausführungsbeispiel als Regler nachfolgend näher beschrieben.

Darin zeigen:

Fig. 1    Grundsätzlicher Aufbau eines High Speed Matrix Controllers
Fig. 2    Aufbau eines High Speed Matrix Controllers im Beispiel
Fig. 3    Bildung einer Speicheradresse
Fig. 4    Bildung der Speicheradresse (16 bit) und deren Inhalt (10 bit)
Fig. 5    Aufbau einer Kaskade von High Speed Matrix Controllern

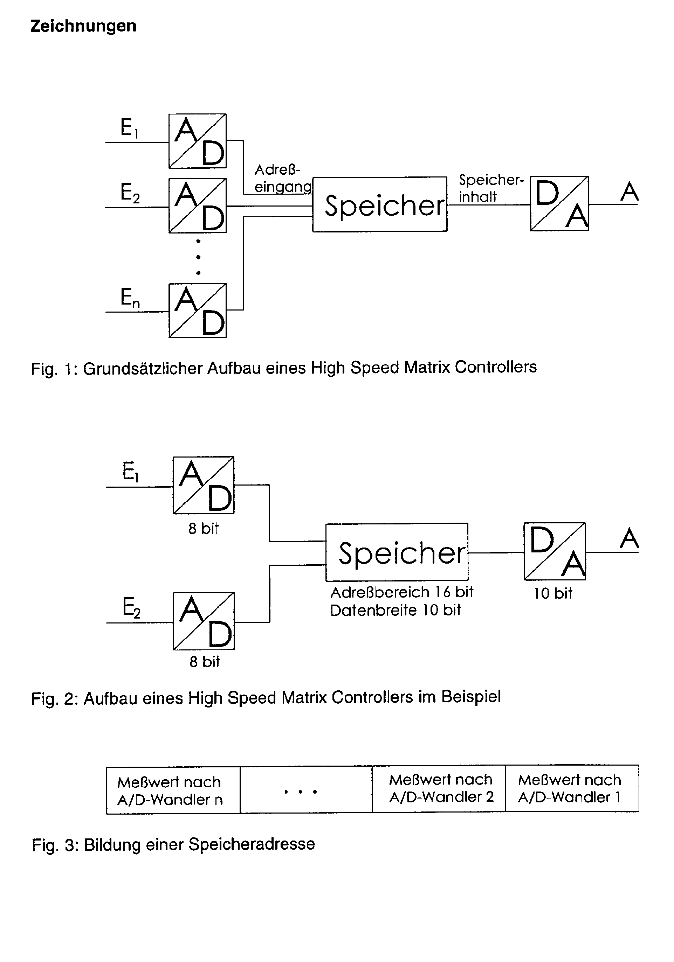

Allgemein besteht der Regler aus n A/D-Wandlern für n Meßsignale, dem Speicher und einem D/A-Wandler (Fig. 1).

Im Beispiel soll ein zweidimensionaler Regler, d.h. mit zwei Eingängen und einem Ausgang, eingesetzt werden. Die Applikation erfordert beispielsweise eine Auflösung der beiden Eingänge von je 8 bit und eine Auflösung des Ausgangs von 10 bit.

Damit werden zwei A/D-Wandler mit je 8 bit Wandlungsbreite verwendet. Der Adreßbereich des Speichers ist dann 2x8 bit = 16 bit und die Datenbreite des Speichers, in den das Kennfeld geladen wird, ist 10 bit (siehe Fig. 2). Im Speicher befinden sich demnach 255 x 255 = 65025 Werte mit einer Auflösung von je 10 bit, die den Regelalgorithmus in Form des Kennfeldes repräsentieren.

Die digitalisierten Meßwerte am Ausgang der A/D-Wandler bestimmen in Reihenfolge die Adresse, unter der das entprechende Ausgangssignal des Controllers im Speicher abgelegt ist (Fig. 3).

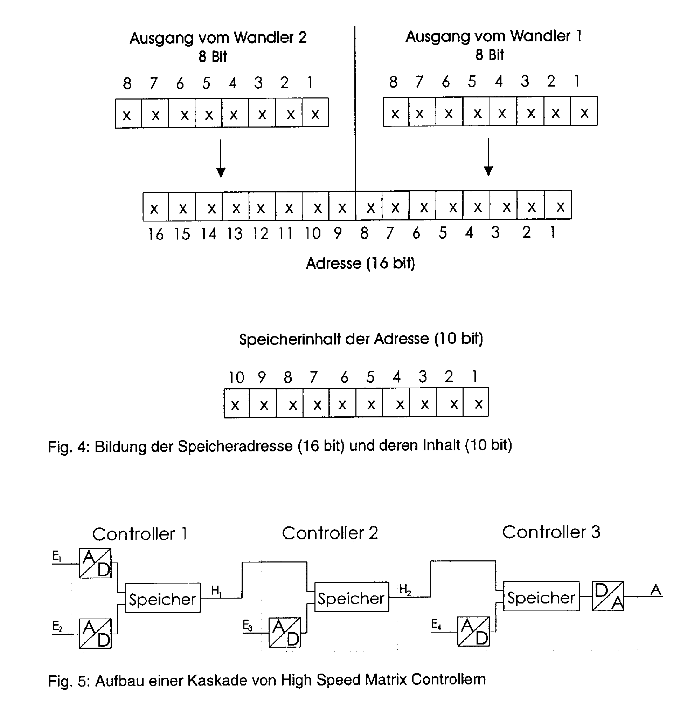

Das bedeutet, daß die beiden 8 bit Meßwerte (Ausgang der beiden Wandler) damit die Adresse (16 bit) ergeben, unter der der gerade diesen Eingangsgrößen entsprechende Matrixpunkt des Reglerkennfeldes (10 bit) abgelegt ist (siehe Fig 4). Über den D/A-Wandler erfolgt dann die Wandlung des 10 bit-Digitalwertes in einen entsprechenden Analogwert als Ausgang.

Für den Einsatz in einem Mehrgrößensystem mit beispielsweise 4 Eingangsgrößen und einer Ausgangsgröße werden aus einer mehrdimensionalen Fuzzy-Controller-Struktur (wissensbasiertes System) eine Kaskade von zweidimensionalen Fuzzy-Controllern erzeugt. Nach Festlegung der dominierenden und nichtdominierenden Eingangsgrößen und Aufteilung auf die einzelnen Controller der Kaskade werden drei der oben beschriebenen High Speed Matrix Controller mit je zwei Eingängen und einem Ausgang zu einer Kaskade zusammengeschaltet.

Der erste Controller verarbeitet die Eingangsgrößen $E_1$ und $E_2$ zu einer virtuellen Größe $H_1$ am Ausgang. Die virtuelle Größe $H_1$ und die Eingangsgröße $E_3$ sind die Eingangsgrößen für den zweiten Controller, dessen Ausgang $H_2$ ist. Die virtuelle Größe $H_2$ und die Eingangsgröße $E_4$ sind die Eingangsgrößen für den dritten Controller, dessen Ausgang A ist (Fig. 5). In diesem Fall können die virtuellen Größen $H_i$ (i=1,2) direkt aus dem Speicher, in dem das Kennfeld hinterlegt ist, ausgelesen werden und bilden ohne nachfolgende D/A- und A/D-Wandlung zusammen mit der nächsten Eingangsgröße die Adresse für den nachfolgenden Speicher. Eine A/D-Wandlung ist nur noch für die Eingangsgrößen und eine D/A-Wandlung für die Ausgangsgröße erforderlich.

Eine Optimierung der Fuzzy-Controller erfolgt offline in einem Simulationssystem durch Variation der Parameter (Anzahl, Form und Verteilung der Fuzzy-Sets) der virtuellen Größen.

Die mit der Erfindung erzielten Vorteile bestehen insbesondere darin, daß durch die direkte Ansteuerung des Kennfeldes in Form von Speicheradressen die minimale Zeit für die Abarbeitung des Algorithmus benötigt wird. Außerdem wird der Hardwareaufwand für den Regler durch den Einsatz des High Speed Matrix Controllers verringert, da im wesentlichen nur Speicherbaugruppen Verwendung finden und ein Rechenbaustein nicht mehr erforderlich ist. Die Funktionssicherheit steigt, da im Speicher keine Rechenoperationen stattfinden, die numerischen und Softwarefehlern unterliegen können. Die Validierung des Algorithmus ist somit gegeben. Von großem Vorteil ist, daß die Abarbeitungzeit unabhängig von Umfang und Art des

Algorithmus und von der Auflösung des Kennfeldes (Anzahl der Matrixpunkte) ist.

Für den Einsatz des High Speed Matrix Controllers in Mehrgrößensystemen ist es vorteilhaft, High Speed Matrix Controller in Form einer Kaskade zusammenzuschalten.

**Patentansprüche**

1. Verfahren zur Regelung zeitkritischer Prozesse durch einen High Speed Matrix Controller mit Algorithmus in Form eines Kennfeldes, das extern berechnet und auf elektronische Speicher geladen wird, und analogen Eingangsgrößen, die über A/D-Wandler digitalisiert werden, dadurch gekennzeichnet, daß

   - die digitalisierten Eingangsgrößen die Adressen bilden, über die der Speicher angesprochen wird und daß der Inhalt der über die Adresse angesprochenen Speicherzelle die digitale Ausgangsgröße ist,
   - gemäß der Unterteilung der Wertebereiche der Eingänge (Auflösung) A/D-Wandler gleicher Auflösung einzusetzen sind,
   - gemäß der Unterteilung der Wertebereiche des Ausgangs (Auflösung) ein D/A-Wandler gleicher Auflösung einzusetzen ist
   - und sich damit der Adreßbereich nach der Summe der Auflösungen der einzelnen A/D-Wandler und die Datenbreite des Speichers nach der Auflösung des D/A-Wandlers ergeben,
   - die Abarbeitungszeit unabhängig von Umfang und Art des Algorithmus und von der Auflösung des Kennfeldes ist.

2. High Speed Matrix Controller nach Patentanspruch 1,
   dadurch gekennzeichnet, daß für die Abarbeitung des Algorithmus die minimal mögliche Zeit benötigt wird, die sich ausschließlich aus der Wandlungszeit des A/D-Wandlers, der Zeit für den Aufruf und das Auslesen des Speichers sowie aus der Wandlungszeit des D/A-Wandlers zusammensetzt.

3. Verfahren zur Regelung zeitkritischer Mehrgrößensysteme durch einen kaskadierten High Speed Matrix Controller nach den Ansprüchen 1 und 2 mit Algorithmus in Form von hintereinandergeschalteten Kennfeldern, die extern berechnet und auf elektronische Speicher geladen werden,
   dadurch gekennzeichnet, daß

   - aus Meßdaten und Erfahrungswissen über Mehrgrößensysteme mehrdimensionale Fuzzy-Controller in Form von Regeln generiert werden,
   - aus der mehrdimensionalen Fuzzy-Controller-Strukur eine kaskadierte Struktur mit einer kleineren Anzahl von Regeln durch einen neuartigen Substitutionsalgorithmus abgeleitet wird,
   - aus der kaskadierten Struktur eine Kaskade von Kennfeldern erzeugt wird, die auf eine Anzahl von High Speed Matrix Controllern, die mit der Anzahl der Elemente der Kaskade übereinstimmt, geladen wird,
   - der erste Controller der Kaskade zwei Meßgrößen als Eingangsgrößen zu einer virtuellen Größe als Ausgangsgröße verarbeitet und die weiteren Controller jeweils eine Meßgröße und die virtuelle Größe des vorigen Controllers zu einer weiteren virtuellen Größe verarbeiten,
   - der Adreßbereich eines Speicherblocks des Controllers sich aus der Summe der Auflösungen des jeweiligen A/D-Wandlers und der Datenbreite der virtuellen Größen ergibt,
   - der Inhalt der über die Adresse angesprochenen Speicherzelle eines Speicherblocks zusammen mit der durch Digitalisierung einer Eingangsgröße gebildeten Adresse eine weitere Adresse für den nachfolgenden Speicherblock bildet,
   - die Datenbreite eines Speicherblocks aus der Auflösung der entsprechenden virtuellen Größe am Ausgang bestimmt wird,
   - der Inhalt der adressierten Speicherzelle des letzten Speicherblocks die Ausgangsgröße ist, wobei sich die Datenbreite des letzten Speicherblocks aus der Auflösung des entsprechenden D/A-Wandlers ergibt.

4. kaskadierter High Speed Matrix Controller nach Patentanspruch 3, dadurch gekennzeichnet, daß

- die höhere Qualität des Controllers durch die einfache Einbeziehung von zusätzlichen Meßinformationen und/oder Erfahrungswissen in Form eines nachgeschalteten Kennfeldes erreicht wird,
- die Übersichtlichkeit und die Validierbarkeit des Algorithmus sowie die transparentere Darstellung des Erfahrungswissens durch die kaskadierte Struktur gewährleistet wird.

**Zeichnungen**

Fig. 1: Grundsätzlicher Aufbau eines High Speed Matrix Controllers

Fig. 2: Aufbau eines High Speed Matrix Controllers im Beispiel

| Meßwert nach A/D-Wandler n | . . . | Meßwert nach A/D-Wandler 2 | Meßwert nach A/D-Wandler 1 |
|---|---|---|---|

Fig. 3: Bildung einer Speicheradresse

Ausgang vom Wandler 2
8 Bit

8  7  6  5  4  3  2  1

| x | x | x | x | x | x | x | x |

Ausgang vom Wandler 1
8 Bit

8  7  6  5  4  3  2  1

| x | x | x | x | x | x | x | x |

| x | x | x | x | x | x | x | x | x | x | x | x | x | x | x | x |

16  15  14  13  12  11  10  9  8  7  6  5  4  3  2  1

Adresse (16 bit)

Speicherinhalt der Adresse (10 bit)

10  9  8  7  6  5  4  3  2  1

| x | x | x | x | x | x | x | x | x | x |

Fig. 4: Bildung der Speicheradresse (16 bit) und deren Inhalt (10 bit)

Controller 1          Controller 2          Controller 3

$E_1$ — [A/D] — [Speicher] — $H_1$ — [Speicher] — $H_2$ — [Speicher] — [D/A] — A

$E_2$ — [A/D]

$E_3$ — [A/D]

$E_4$ — [A/D]

Fig. 5: Aufbau einer Kaskade von High Speed Matrix Controllern

**Europäisches Patentamt**

## EUROPÄISCHER RECHERCHENBERICHT

Nummer der Anmeldung

EP 99 11 2101

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl7) |
|---|---|---|---|
| E | DE 197 56 507 A (HOCHSCHULE FUER TECHNIK WIRTSC) 22. Juli 1999 (1999-07-22) * das ganze Dokument * | 1-4 | G05B15/02 G05B19/40 |
| A | DE 39 31 962 A (REXROTH MANNESMANN GMBH) 4. April 1991 (1991-04-04) * Anspruch 1; Abbildung 2 * | 1-4 | |
| A | DE 39 11 259 A (REXROTH MANNESMANN GMBH) 11. Oktober 1990 (1990-10-11) * Anspruch 1; Abbildung 1 * | 1-4 | |
| A | US 5 261 036 A (NAKANO NOBUMASA) 9. November 1993 (1993-11-09) * das ganze Dokument * | | |

**RECHERCHIERTE SACHGEBIETE (Int.Cl7)**

G05B

Der vorliegende Recherchenbericht wurde für alle Patentansprüche erstellt

| Recherchenort | Abschlußdatum der Recherche | Prüfer |
|---|---|---|
| MÜNCHEN | 10. November 1999 | Messelken, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 2101

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-11-1999

| Im Recherchenbericht angeführtes Patentdokument | Datum der Veröffentlichung | Mitglied(er) der Patentfamilie | Datum der Veröffentlichung |
|---|---|---|---|
| DE 19756507 A | 22-07-1999 | KEINE | |
| DE 3931962 A | 04-04-1991 | JP 3149602 A<br>US 5179330 A | 26-06-1991<br>12-01-1993 |
| DE 3911259 A | 11-10-1990 | IT 1239410 B<br>JP 2292585 A<br>US 5024417 A | 20-10-1993<br>04-12-1990<br>18-06-1991 |
| US 5261036 A | 09-11-1993 | JP 2522415 B<br>JP 3137701 A<br>US 5388190 A<br>DE 69029702 D<br>DE 69029702 T<br>EP 0424890 A<br>HK 1006045 A | 07-08-1996<br>12-06-1991<br>07-02-1995<br>27-02-1997<br>04-09-1997<br>02-05-1991<br>05-02-1999 |

EPO FORM P0461

Für nähere Einzelheiten zu diesem Anhang : siehe Amtsblatt des Europäischen Patentamts, Nr.12/82